# EUROPÄISCHE PATENTANMELDUNG

(11) **EP 0 896 809 A1**
(43) Veröffentlichungstag der Anmeldung: **17.02.1999**
(21) Anmeldenummer: 98113452.1
(22) Anmeldetag: 18.07.1998
(51) Int. Cl.: A47J 37/07

(54) **Heissluft-Grillgerät**

(30) Priorität: 13.08.1997 DE 19734990
(71) Anmelder: Weigert, Florian, 93186 Pettendorf (DE)
(72) Erfinder: Weigert, Florian, 93186 Pettendorf (DE)
(74) Vertreter: Wasmeier, Alfons, Dipl.-Ing.

(57) **Zusammenfassung**

Ein Heißluft-Grillgerät weist unterhalb des Grillrostes (18) und der Grillkohle eine Wasserwanne (24) zur Aufnahme des vom Grillgut tropfenden Fettes, eine Aufnahmevorrichtung (7,8,13) für die Grillkohle außerhalb der Projektion des Gitterrostes (18) am Grillboden, unterhalb der Aufnahmevorrichtung für die Grillkohle schubartige Aschebehälter (10), die die Luftzufuhr steuern, und oberhalb des Aufnahmebehälters für Grillkohle ein die Heißluftströme führendes Gehäuse (3) bis zum Grillrost (18) nach oben verlaufend auf, wobei der Heißluftstrom in Richtung auf die Mittelachse des Grillgerätes gelenkt und verwirbelt wird, der Querschnitt des Luftkanals reduziert und anschließend bis zum Querschnitt des Gitterrostes vergrößert wird.

## Beschreibung

Die Erfindung betrifft ein Heißluft-Grillgerät nach dem Oberbegriff des Anspruches 1.

Aus der EP 0 296 166 B1 ist ein Grillgerät mit einer zentralen Wärmekammer und beidseitig dieser Kammer angeordneten Heizgutbehältern, z.B. zur Aufnahme der Grillkohle bekannt, die durch vertikale Trennwände voneinander getrennt sind. Am Boden der Wärmekammer ist eine Wanne zur Aufnahme von Wasser, Wein oder dgl. Flüssigkeit vorgesehen. Die Fläche des Grillrostes entspricht der Oberfläche dieser Wanne. In den seitlichen Heizgutbehältern sind Kanäle mit Öffnungen vorgesehen, durch die Zuluft eingeführt werden kann. Die Hitze aus den Heizgutbehältern wird durch die Seiten-Trennwände als Strahlungshitze auf das Grillgut übertragen. Fettpartikel und dgl. tropfen vom Grillgut nach abwärts in die Auffangwanne.

Vergleichbare Grillgeräte sind aus DE 29 41 290 A1 und DE 195 15 080 A1 bekannt. Hierbei sind die Heizgutbehälter mit seitlichen, von außen nach innen ansteigenden Deckwänden ausgebildet, die den Heißluftstrom in einen verjüngten Kamin richten, der durch einen Grillrost abgeschlossen ist.

Die bekannten Grillgeräte der vorbeschriebenen Art haben eine Reihe von Nachteilen, nämlich einen Grillrost begrenzter Wirkfläche, der praktisch deckungsgleich mit der darunterliegenden Fetttropfwanne ist, eine sehr begrenzt effektive Heißluftführung, eine unzureichende Steuerung der Luftzufuhr und dergl.

Aufgabe der Erfindung ist, ein Heißluft-Grillgerät so auszubilden, daß ein möglichst großflächiger Grillrost erzielt wird, die Heißluftführung so auszugestalten, daß eine intensive Kaminwirkung erreicht wird, zu verhindern, daß Flammen von der glühenden Grillkohle an das Grillgut gelangen können, und in Verbindung mit der Heißluft Wasserdampf an das Grillgut zu bringen, um ein Austrocknen des Grillgutes zu vermeiden und das Grillgut saftig zu erhalten.

Gemäß der Erfindung wird dies mit den Merkmalen des Kennzeichens des Anspruches 1 erreicht. Weitere Ausgestaltungen der Erfindung sind Gegenstand der Unteransprüche.

Die entscheidenden Merkmale des erfindungsgemäßen Grillgerätes sind darin zu sehen, daß die Heißluftströme, die zum Garen des Grillgutes verwendet werden, kaminartig geführt werden, daß die den Verbrennungsvorgang beeinflußende Frischluft in der zugeführten Menge gesteuert werden kann, daß die Heißluft zur Erzielung einer hohen Temperatur an den Grillrosten auf dem Weg nach oben verwirbelt und verzögert wird, daß das Wasser in der Wasserwanne am Boden des Grillgerätes vorgesehen ist, der Grillkohle so zugeordnet ist, daß die von der glühenden Grillkohle ausgehende Wärme das Wasser verdampft und unmittelbar im Kamin nach oben zu den Grillrosten hochfördert, und daß durch die Erweiterung des Kamins die Grillfläche erheblich größer als die minimale Querschnittsfläche des Kamins ausgebildet werden kann.

Dieser Wasservorrat hat einerseits den Zweck, das vom Grillgut nach unten tropfende Fett oder dgl. Flüssigkeit aufzufangen, so daß das Fett im Wasser aufgenommen und zusammen mit dem Wasser im wesentlichen geruchsfrei und auf unschädliche Weise entsorgt werden kann. Zum anderen erfüllt der Wasservorrat den Zweck, nach oben steigenden Wasserdampf zu liefern, der auf das Grillgut einwirkt und verhindert, daß das Grillgut aufgrund der herrschenden Hitze trocken wird, wie dies bei herkömmlichen Grillgeräten üblich ist. Die den Wasservorrat aufnehmende Wanne ist vorzugsweise in Form eines Schubers ausgebildet, der im Boden des Grillgehäuses verschiebbar geführt ist.

Die Grillkohle ist im Abstand zur Mittelachse beidseitig im Falle eines rechteckförmigen Grillgerätes so angeordnet, daß ein für den Luftstrom frei und ungehindert durchströmbarer Kaminraum entsteht, und sichergestellt ist, daß die nach abwärts tropfende Flüssigkeit nicht mit der Grillkohle in Kontakt kommen kann. Die Grillkohle ist dabei in hierfür vorgesehenen Wannen angeordnet, die einen Rost- oder Lochblechboden aufweisen, über den die Steuerung der Luftzufuhr zur Grillkohle sichergestellt ist. Bei einer bevorzugten Ausführungsform der Erfindung ist unterhalb der Aufnahmebehälter für die Grillkohlen jeweils ein Raum vorgesehen, der zur Aufnahme der Asche und gleichzeitig zur Steuerung der Luftzufuhr ausgebildet ist. Vorzugsweise sind hierfür Schübe vorgesehen, die unterhalb der Lochbleche angeordnet sind, so daß die durch die Lochbleche hindurchfallende Asche aufgenommen und auf einfache Weise entfernt werden kann, während gleichzeitig durch das Ausmaß des Öffnens der Schübe die Frischluftzufuhr über die mehr oder weniger weit geöffneten Schübe sowie durch die Lochbleche und die glühende Grillkohle hindurch gesteuert werden kann. Ein erhöhter Luftdurchsatz bedeutet dabei eine höhere Heißlufttemperatur, die in den Kamin und im Kamin nach oben zu den Gitterstäben des Rostes strömt.

Die Behälter zur Aufnahme der Grillkohle sind so ausgebildet, daß ein oberer Abschluß vorgesehen ist, der als Deckel und gleichzeitig als Führungsfläche für die Luftströmung in den Kamin ausgebildet ist. Die deckelartige Abdeckung schließt die Grillkohle nach außen ab und ist beispielsweise an der Gehäusewand angelenkt und zum Befüllen aufklappbar.

Mit einem Heißluftgrill nach der Erfindung wird erreicht, daß das Grillgut ausschließlich durch heiße Luft gegrillt wird, also verhindert wird, daß Flammen aus der Grillkohle mit dem zu grillenden Gut in Kontakt kommen, daß aufgrund der besonderen Ausgestaltung des Gerätes eine Kaminwirkung für die von der Grillkohle zum Grillrost strömende Heißluft erzielt wird, daß die Grillkohle vollständig außerhalb des Einflußbereiches des von dem zu grillenden Gut abtropfenden Fettes oder dgl. Bestandteilen ist, so daß damit gefährliche oder gesundheitsschädliche Dämpfe eindeutig vermieden werden. Desweiteren ist ein entscheidender Vorteil des erfindungsgemäßen Grillgerätes, daß von der bodenseitigen, mit Wasser gefüllten Wanne Wasserdampf hochsteigt, am Kamineffekt partizipiert und an das auf den Grillrosten liegende Grillgut gelangt, wodurch das Grillgut, insbesondere Fleisch, weich und zart bleibt und damit verhindert wird, daß das Grillgut austrocknet und/oder verbrannt wird.

Nachstehend wird die Erfindung in Verbindung mit der Zeichnung anhand eines Ausführungsbeispieles erläutert. Es zeigt:

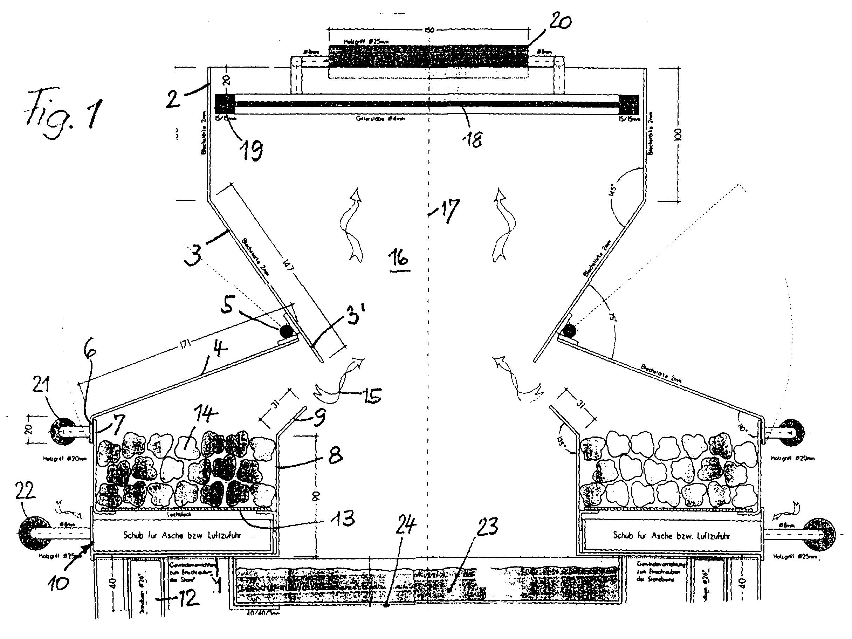

Fig. 1 eine Schnittansicht des Grillgerätes nach der Erfindung,

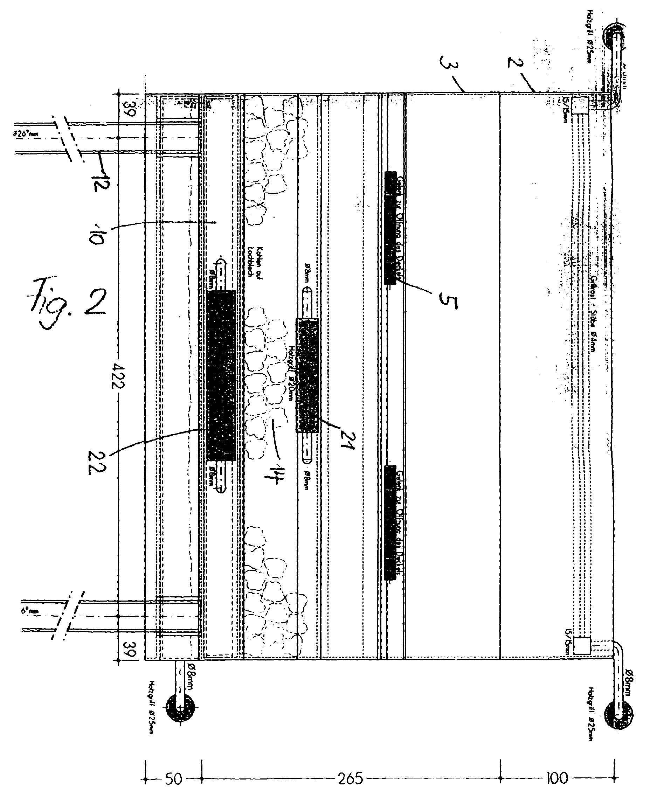

Fig. 2 eine Ansicht des Grillgerätes nach Fig. 1 von der Seite, und

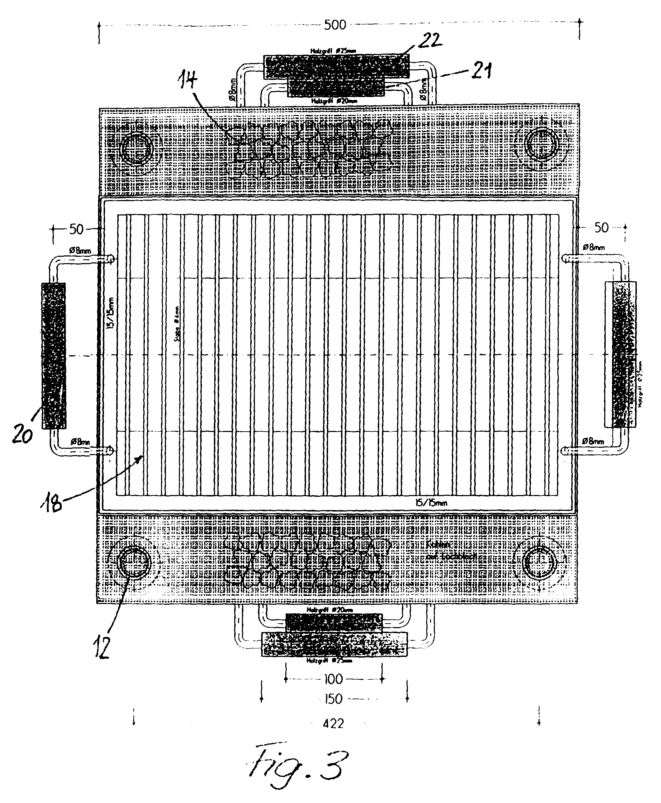

Fig. 3 eine Aufsicht auf das Grillgerät nach Fig. 1.

Das Gehäuse des Grillgerätes 1 (das zur strichpunktiert dargestellten Achse symmetrisch ausgebildet ist, sodaß nur eine der beiden Hälften beschrieben wird), besteht aus einem oberen Abschnitt mit eine Trichterform bildenden Wänden 2, 3, wobei die Wand 2 etwa vertikal, die Wand 3, 3' nach unten und innen geneigt verläuft, und die freien Enden der beiden sich gegenüberstehenden Wände 3 voneinander beabstandet sind. Der untere Teil des Gehäuses 1 besteht aus einer von der Wand 3 nach unten und außen verlaufenden schrägen Wand 4, die als Deckel ausgebildet ist und an einem Gelenk 5 mit der Wand 3 verbunden ist, sowie einem am äußeren Ende vorgesehenen vertikalen Rand 6 für den Abschluß mit der vertikalen Außenwand 7, der Innenwand 8 und einer anschließenden Führungswand 9. Die Wände 7 und 8 sind unten von einer Schuberanordnung 10 begrenzt, die auf der Bodenwand 11 des Gehäuses 1 angeordnet ist. Das gesamte Gehäuse ruht auf Füßen 12. Die vertikalen Wände 7 und 8 sind durch eine Lochblechwand oder Rostwand 13 begrenzt, die zusammen mit den Seitenwänden 7 und 8 und entsprechenden Stirnwänden den Behälter zur Aufnahme der Grillkohle 14 bilden. Mit 15 ist die Strömungsrichtung der durch den Schuber 10 strömenden Zuluft, die als Heißluft die glühende Grillkohle verläßt, bezeichnet. Die Strömungsrichtung der Heißluft 15 wird nach oben durch die Deckelwand 4 und nach innen durch den Wandteil 9 begrenzt, wobei die Wände 4 und 9 miteinander einen schräg nach innen und oben verlaufenden Strömungskanal ausbilden, der in den vertikalen Heißluftkamin 16 mündet. Die schräge Wand 3 dient dabei gleichzeitig als Auffangwand für von den seitlichen Teilen des Grillrostes tropfendem Fett. Mit 17 ist die Mittelachse dargestellt, die das Grillgehäuse in zwei symmetrische Abschnitte teilt, von denen hier nur der linke beschrieben ist. Die Heißluft 15 strömt durch den Kamin 16 nach oben und zum Gitterrost 18, der in einem Rostrahmen bzw. einer Rostauflage 19 gehalten ist. Damit wird das auf dem Grillrost 18 liegende, zu grillende Gut von der aufströmenden Heißluft umströmt und gegart. Mit 20 sind die Handgriffe für das gesamte Grillgerät, mit 21 die Handgriffe für die beidseitigen Deckel 4 und mit 22 die Handgriffe für die beidseitigen Schübe 10 dargestellt. 23 bezeichnet eine Wasserwanne, die an Trägern 24 des Bodens 11 des Behälters angeordnet ist. Die Wasserwanne liegt zwischen den beidseitig zur Symmetrieachse 17 angeordneten Behältern für die Grillkohle 14, und ist als Schuber ausgebildet. Die Wasseroberfläche entspricht weitgehend dem Querschnitt des Kamins 16, so daß Wasserdampf aufgrund der von der glühenden Grillkohle 14 abgegebenen Hitze im Kamin 16 nach aufwärts strömt und auf das auf dem Gitterrost befindliche, zu grillende Gut auftrifft und es während des Grillvorganges mit Feuchtigkeit anreichert, wodurch das Grillgut zart und aromatisch bleibt. Das Wasser innerhalb der Wanne 23 dient desweiteren zur Aufnahme von vom Grillgut nach abwärts tropfendem Fett und anderen Stoffen, die teilweise an den trichterförmigen Wänden 3 nach abwärts laufen und von dort in das Wasser tropfen, ohne daß ein Kontakt mit der glühenden Grillkohle auftreten kann.

### Bezugszeichenliste

- 1: Gehäuse
- 2: vertikale obere Wand
- 3: nach innen unten geneigte Wand
- 4: an 3 anschließende, nach außen und unten geneigte Wand = Deckel
- 5: Gelenkstelle des Deckels angelenkt an 3
- 6: Deckelrand vertikal
- 7: Außenwand des Behälters für die Grillkohle
- 8: innenliegende Wand des Behälters für die Grillkohle
- 9: Leitwand für Heißluft
- 10: Schuber für Asche und Luftsteuerung
- 11: Boden des Gehäuses 1 bzw. des Schubers 10
- 12: Füße für das Gehäuse
- 13: Lochblech
- 14: Grillkohle
- 15: Heißluftstrom
- 16: Kamin
- 17: Mittelachse
- 18: Gitterrost
- 19: Rostrahmen bzw. Rostauflage
- 20, 21, 22: Griffe
- 23: Wasserwanne
- 24: Wannenaufnahme

## Patentansprüche

1. Heißluft-Grillgerät mit einem Grillrost, einem einen zentralen Kamin festlegenden Gehäuse und jeweils einer zu beiden Seiten des Kamins angeordneten Heizkammer für die Aufnahme der Grillkohle, bei dem
a) die Grillrostfläche (18) größer als der minimale Kaminquerschnitt ausgebildet ist,
b) die beiden Heizkammern (7, 8, 13) im wesentlichen außerhalb der Projektion des Gitterrostes (18) am Boden des Gehäuses angeordnet sind,
c) unterhalb des perforierten Bodens (13) der Heizkammern Schübe (10) für die Aufnahme der Asche und für die Steuerung der Luftzufuhr vorgesehen sind,
d) unterhalb des Grillrostes (18) und unterhalb der Heizkammern eine schuberar tige Wasserwanne (24) zur Aufnahme des vom Grillgut tropfenden Fettes vor gesehen ist, die durch einen Teil der Ascheschuber (10) überlappt ist,
e) die Heizkammern Deckel (4) aufweisen, welche eine nach innen ansteigende Heißluftleitfläche ausbilden, gelenkig (bei 5) angeordnet sind und an der nach oben anschließenden, sich nach außen erweiternden Gehäusewand (3) zu sammen mit der Innenwand (8, 9) der Heizkammer eine Verengung des Strömungskanales am Übergang in den Kamin bilden.

2. Heißluft-Grillgerät nach Anspruch 1, dadurch gekennzeichnet, daß die Schübe (10) nach oben und/oder seitlich durch Lochbleche (13) oder dgl. luftdurchlässige Abdeckungen begrenzt sind, und daß die Lochbleche oder dgl. die Bodenfläche der Heizkammern für die Aufnahme der Grillkohle (14) sind.

3. Heißluft-Grillgerät nach Anspruch 1, gekennzeichnet durch eine Schiebersteuerung am Boden (13) der Heizkammer (7, 8, 13), mit der die Luftzufuhr zur Grillkohle (14) steuerbar ist.

4. Heißluft-Grillgerät nach einem der Ansprüche 1 - 3, dadurch gekennzeichnet, daß das Grillgehäuse vom Gitterrost (18) nach innen und abwärts verlaufend (bei 3) konisch ausgebildet ist, daß die konischen Behälterwände (3) Leitwände für das nach abwärts tropfende Fett darstellen, und daß das Gehäuse als freier Durchströmkanal für die aufsteigende Heißluft ausgebildet ist.

5. Heißluft-Grillgerät nach Anspruch 4, dadurch gekennzeichnet, daß die von der Heizkammer (7, 8, 13) ausgehenden Heißluftströme oberhalb der Kohle (14) an geneigten Deckelwänden (4) entlang geführt auf eine Prallfläche auftreffen und umgelenkt werden, derart, daß die Heißluftströme zur Mittenachse (17) des Grillgehäuses gerichtet werden.

6. Heißluft-Grillgerät nach Anspruch 4 oder 5, dadurch gekennzeichnet, daß die Deckelwände (4) an den konischen Gehäusewänden angelenkt (bei 5) und zum Einfüllen der Grillkohle (14) von außen anhebbar sind.

7. Heißluft-Grillgerät nach einem der Ansprüche 1 - 6, dadurch gekennzeichnet, daß die Deckelwände (4) und die inneren Seitenwände (8) der Aufnahmevorrichtungen für die Grillkohle (14) zur Mittenachse des Grillgerätes zu sich konisch verjüngend ausgebildet sind.

8. Heißluft-Grillgerät nach einem der Ansprüche 1 - 7, dadurch gekennzeichnet, daß im Gehäuse Ablenkbleche (9, 3') vorgesehen sind, die die von der Grillkohle (14) ausgehenden, nach oben strömenden Heißluftströme verwirbeln.
